# EUROPÄISCHE PATENTSCHRIFT

(11) **EP 3 620 323 B1**
(45) Veröffentlichungstag und Bekanntmachung des Hinweises auf die Patenterteilung: **15.04.2026**
(21) Anmeldenummer: 18192556.1
(22) Anmeldetag: 04.09.2018
(51) Int. Cl.: B60L 15/20, B62K 23/02, B62M 6/45

(54) **PEDELEC**
PEDELEC
VÉLO À ASSISTANCE ÉLECTRIQUE

(43) Veröffentlichungstag der Anmeldung: 11.03.2020
(73) Patentinhaber: SRAM, LLC, Chicago, IL 60607 (US)
(72) Erfinder: Greven, Dietmar, 41541 Dormagen (DE); Misgeld, Berno Johannes Engelbert, 41460 Neuss (DE)
(74) Vertreter: terpatent PartGmbB

(56) Entgegenhaltungen:
- EP-A1- 2 586 686
- WO-A1-2015/007423
- CN-U- 202 208 349
- CN-U- 206 856 918
- US-A- 5 992 553
- US-A1- 2016 318 583
- US-A1- 2017 355 412

## Beschreibung

Die Erfindung bezieht sich auf ein Pedelec mit einem Tretantrieb, einem elektrischen Unterstützungsmotor und einer Pedelec-Steuervorrichtung zur Steuerung des den Tretantrieb unterstützenden Unterstützungsmotors.

Unter einem Pedelec wird vorliegend ausschließlich ein Fahrrad verstanden, das mit einem elektrischen Unterstützungsmotor ausgestattet ist, der ausschließlich unterstützend arbeitet, also nur dann aktiv ist, wenn der Fahrradfahrer über den Tretantrieb ein Tret-Antriebsmoment generiert.

Das Pedelec weist eine Steuervorrichtung, einen Geschwindigkeits-Sensor zur Ermittlung der Pedelec-Geschwindigkeit und einen Tretdrehmoment-Sensor zur Ermittlung des beispielsweise an der Tretwelle eingeleiteten Tretdrehmoments auf. Die Steuervorrichtung ist mit dem Geschwindigkeits-Sensor und dem Tretdrehmoment-Sensor informell verbunden und erhält von den genannten Sensoren eine Pedelec-Geschwindigkeits-Informationen und eine Tretdrehmoment-Information.

Aus WO 2015/007423 (D1) ist ein Pedelec mit einer Steuervorrichtung bekannt, die einen Taster aufweist, mit der eine Boost-Bereitschaft aktiviert werden kann. Durch die Boost-Anhebung wird der General-Unterstützungsgrad sowohl während der Fahrt als auch zum Anfahren erhöht. Zur Auslösung der Boostanhebung während der Bereitschaft wird die Bremsaktivierung bzw. die Höhe des human eingeleiteten Drehmoments ausgewertet, und wird erst bei Überschreitung eines bestimmten humanen Drehmoments eingeschaltet.

Aus DE 10 2016 107 784 A1 ist eine Steuervorrichtung bekannt, die zwei Taster aufweist, durch die der Tretdrehmoment-abhängige General-Unterstützungsgrad schrittweise erhöht oder verringert werden kann. Der General-Unterstützungsgrad ist jeweils eine Tretdrehmoment-abhängige Funktion, durch die der Grad der Unterstützung des Tretens der Pedale durch den Unterstützungsmotor definiert ist. Der General-Unterstützungsgrad kann beispielsweise relativ niedrig gewählt werden, um auf diese Weise eine gewisse körperliche Tretleistung abzufordern und/oder eine hohe Reichweite sicherzustellen. Insbesondere ein relativ niedriger General-Unterstützungsgrad kann jedoch unangenehm oder lästig sein, wenn häufig aus dem Stillstand heraus angefahren werden muss, wie dies beispielsweise in der Stadt auftreten kann. Beim häufigen Anfahren wird es unter Umständen als unangenehm empfunden, hierbei nur einen relativ niedrigen Unterstützungsgrad zu haben. Es ist daher vorgesehen, dass über eine separate Taste der Steuervorrichtung eine Anfahrboost-Funktion eingeschaltet werden kann, durch die nach einem Stillstand des Pedelecs beim Anfahren der Gesamt-Unterstützungsgrad durch eine Boostanhebung angehoben wird, bis beispielsweise eine bestimmte Geschwindigkeit erreicht ist.

Aufgabe der Erfindung ist es, ein Pedelec mit einer Steuervorrichtung zu schaffen, durch die auf einfache Weise eine Anfahrboost-Funktion ein- und ausgeschaltet werden kann.

Diese Aufgabe wird erfindungsgemäß gelöst mit einem Pedelec mit den Merkmalen des Anspruchs 1.

Erfindungsgemäß ist vorgesehen, dass einer der beiden Taster zur schrittweisen Veränderung des Tretdrehmoment-abhängigen General-Unterstützungsgrades eine Doppelfunktion erhält. Die Steuervorrichtung ist derart ausgebildet, dass nur bei Pedelec-Stillstand die Zweitfunktion des betreffenden Tasters eingeschaltet ist. Bei Pedelec-Stillstand wird bei Betätigung des betreffenden Tasters eine Anfahrboost-Funktion eingeschaltet, so dass bei dem sich an den Stillstand anschließenden Anfahren der Gesamt-Unterstützungsgrad über den General-Unterstützungsgrad hinaus um eine Boostanhebung angehoben ist.

Die Steuervorrichtung weist also für die Bedienung der Anfahrboost-Funktion keinen weiteren separaten Schalter oder Taster auf. Hierdurch wird die Steuervorrichtung auf der Hardwareseite einfach gehalten und wird ein einfaches und logisches Bedienkonzept realisiert.

Es ist vorgesehen, dass die Anfahrboost-Funktion nach einmaligem Anfahren abgeschaltet wird. Die Anfahrboost-Funktion muss also dann bei jedem Stillstand des Pedelecs explizit über den betreffenden Taster aktiviert werden, wenn sie gewünscht ist.

Vorzugsweise ist der Taster zum Einschalten der Anfahrboost-Funktion der Taster, mit dem der General-Unterstützungsgrad schrittweise erhöht wird.

Vorzugsweise kann vorgesehen sein, dass die Anfahrboost-Funktion durch eine erneute Betätigung des betreffenden Tasters bei Pedelec-Stillstand wieder abgeschaltet wird. Die Anfahrboost-Funktion bleibt also so lange eingeschaltet, bis sie durch erneute Betätigung des betreffenden Tasters explizit wieder abgeschaltet wird.

Vorzugsweise ist die Steuervorrichtung derart ausgebildet, dass die Boostanhebung nach Erreichen eines Abbruchkriteriums beendet ist. Dieses Abbruchkriterium kann beispielsweise ein Zeitwert oder eine Pedelec-Geschwindigkeit sein. Beispielsweise kann das Abbruchkriterium als Zeitwert wenige Sekunden betragen oder als Geschwindigkeit beispielsweise 5 km/h. Mit Erreichen des Abbruchkriteriums und Beenden der Boostanhebung wird jedoch nicht zwangsweise die Anfahrboost-Funktion abgeschaltet.

Gemäß einer bevorzugten Ausgestaltung weist das Pedelec einen Neigungssensor auf, der den Nickwinkel des Pedelecs ermittelt und der mit der Steuervorrichtung informell verbunden ist. Die Steuervorrichtung ist derart ausgebildet, dass der Grad der Boostanhebung abhängig von dem Pedelec-Nickwinkel ist. Die Boostanhebung ist also nicht unter allen Bedingungen gleich groß, sondern wird abhängig von dem Pedelec-Nickwinkel graduell eingestellt. Bei aufwärts gerichtetem Nickwinkel wird die Boostanhebung größer eingestellt als bei einem abwärts gerichteten Nickwinkel, jeweils in Fahrtrichtung betrachtet.

Vorzugsweise wird die Boostanhebung größenmäßig unabhängig von dem gemessenen Tretdrehmoment eingestellt, und kann beispielsweise die technisch oder rechtlich maximal zulässige Unterstützung ergeben.

Im Folgenden wird ein Ausführungsbeispiel der Erfindung anhand der Zeichnungen näher erläutert. Es zeigen:
Figur 1 ein Pedelec mit einem Tretantrieb, einem elektrischen Unterstützungsmotor und einer Pedelec-Steuervorrichtung,

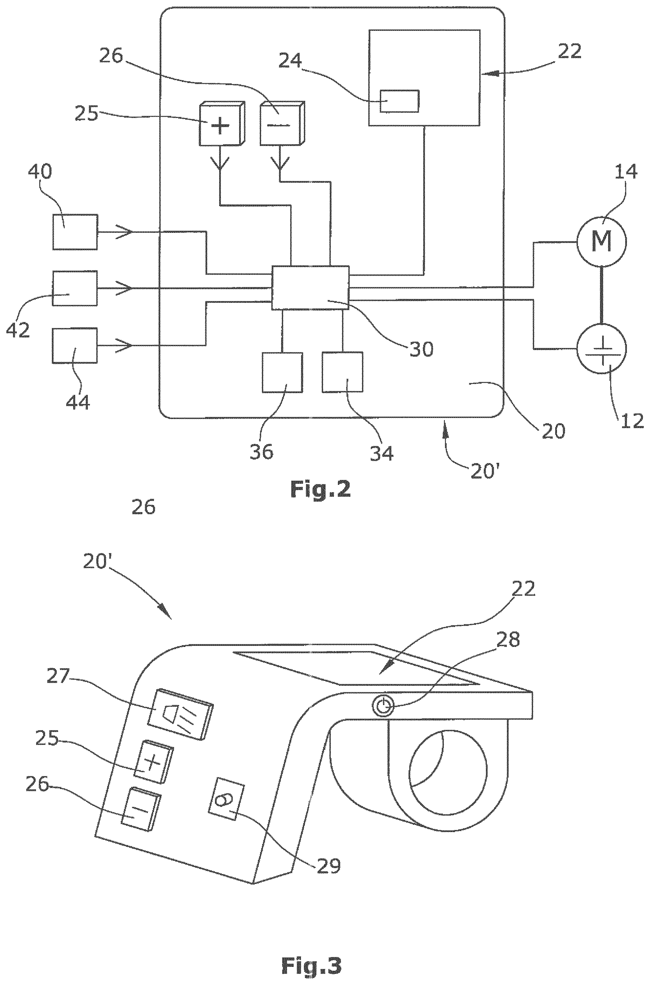

Figur 2 die Steuervorrichtung der Figur 1 in schematischer Darstellung, und
Figur 3 eine Bedieneinheit mit der Steuervorrichtung der Figuren 1 und 2.

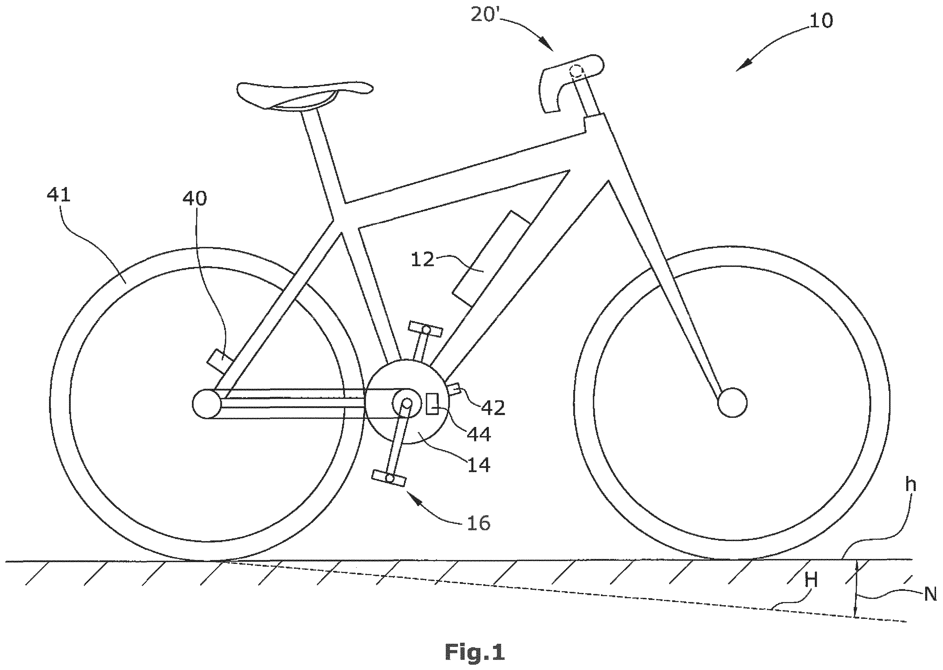

In der Figur 1 ist schematisch ein typisches Pedelec 10 dargestellt, das einen Tretantrieb 16 mit zwei Tretkurbelarmen und daran jeweils endseitig befestigten Tretpedalen, einen den Tretantrieb 16 unterstützenden elektrischen Tretlager-Unterstützungsmotor 14, eine elektrische Batterie 12 und eine elektronische Bedieneinheit 20' an dem Lenker aufweist, die eine Pedelec-Steuervorrichtung 20 enthält. Der Unterstützungsmotor 14 wird durch die Steuervorrichtung 20 ausschließlich unterstützend betrieben.

Der Unterstützungsmotor 14 weist einen Tretdrehmoment-Sensor 44 auf, durch den das über den Tretantrieb 16 eingeleitete Drehmoment quantitativ erfasst wird. Das Pedelec 10 weist einen Neigungssensor 42 auf, der den Nickwinkel N des Pedelecs 10 gegenüber der Erd-Horizontalen H ermittelt, also dem Winkel N zwischen der Erd-Horizontalen H und der Pedelec-Aufstandsebene h. Ferner weist das Pedelec 10 einen Pedelec-Geschwindigkeits-Detektor 40 auf, der beispielsweise an dem Hinterrad 41 des Pedelecs 10 über die Drehgeschwindigkeit des Hinterrads 41 die Pedelec-Geschwindigkeit über Grund detektiert.

Alle vorgenannten Sensoren 40,42,44 sind über entsprechende Signalleitungen oder alternativ auch drahtlos mit der Steuervorrichtung 20 bzw. mit einem Steuerungsprozessor 30 darin verbunden. Ferner ist die Steuervorrichtung 20 über entsprechende Signalleitungen auch direkt mit dem Unterstützungsmotor 14 und der Batterie 12 verbunden.

Die Bedieneinheit 20' bzw. die Steuervorrichtung 20 weist ein grafisches Display 22 sowie einen Taster 25 zur schrittweisen Erhöhung des Tretdrehmoment-abhängigen General-Unterstützungsgrades sowie einen Taster 26 zur schrittweisen Verringerung des Tretdrehmoment-abhängigen General-Unterstützungsgrades auf. Ferner weist die Bedieneinheit 20' noch einen kleinen Joystick 29 zur Menüsteuerung, einen Fahrtlicht-Schalter 27 zum Ein- und Ausschalten des Fahrtlichts sowie einen Betriebsschalter 28 auf, mit dem die Steuervorrichtung 20 ein- und ausgeschaltet wird.

Die Steuervorrichtung 20 weist ferner einen Anfahrboost-Auftragsspeicher 36 sowie einen Abbruchkriterium-Speicher 34 auf. Die beiden Speicher 34,36 können als Hardware oder als Software ausgebildet sein. In dem Anfahrboost-Auftragsspeicher 36 ist gespeichert, ob eine Anfahrboost-Funktion eingeschaltet oder ausgeschaltet ist. In dem Abbruchkriterium-Speicher 34 ist das Abbruchkriterium für die Beendigung einer Boostanhebung gespeichert, beispielsweise eine Grenz-Geschwindigkeit von beispielsweise 7 km/h oder ein Zeitwert von beispielsweise 2,0 Sekunden.

Mit den beiden Tastern 25,26 wird der generelle Tretdrehmoment-abhängige motorische Unterstützungsgrad graduell eingestellt, beispielsweise in 5-6 schrittweisen Gradierungen. Hierdurch kann der allgemeine Grad der elektromotorischen Unterstützung des Unterstützungsmotors 14 eingestellt werden, die beispielsweise im Wesentlichen proportional zu dem vom Fahrer eingebrachten Tretdrehmoment ausgestaltet sein kann.

Der Erhöhungs-Taster 25 hat eine Doppelfunktion: bei Stillstand des Pedelecs 10 wird durch seine einmalige Betätigung nicht der General-Unterstützungsgrad erhöht, sondern eine Anfahrboost-Funktion eingeschaltet, was in dem Anfahrboost-Auftragsspeicher 36 gespeichert wird. Der Stillstand des Pedelec 10 wird durch eine quasi-kontinuierliche Abfrage der Messwerte des Fahrradgeschwindigkeit-Detektors 40 festgestellt. Wenn die Anfahrboost-Funktion eingeschaltet ist, wird beim folgenden Anfahren aus dem Stillstand der Unterstützungsgrad über den General-Unterstützungsgrad hinaus um eine Boostanhebung angehoben.

Die Boostanhebung wird hierbei in Abhängigkeit von dem durch den Neigungs-Sensor 42 gemeldeten Pedelec-Neigungswert graduell eingestellt wird. Die Boostanhebung selbst ist unabhängig von dem Tretdrehmoment und kann ggf. so groß ausfallen, dass der Gesamt-Unterstützungsgrad die technisch und/oder rechtlich zulässige Obergrenze erreicht.

Alternativ kann die Boostanhebung auch stets so groß ausfallen, dass die technisch und/oder rechtlich zulässige Obergrenze in jedem Fall erreicht wird.

Während des Anfahrens mit eingeschalteter Anfahrboost-Funktion ermittelt der Steuerungsprozessor 30 quasi-kontinuierlich die seit dem Anfahren verstrichene Zeit bzw. die aktuelle Pedelec-Geschwindigkeit. Sobald das in dem Abbruchkriterium-Speicher 34 gespeicherte Abbruchkriterium erreicht ist, wird die Boostanhebung abgeschaltet, nicht jedoch die Anfahrboost-Funktion.

Die Anfahrboost-Funktion wird auf zweierlei Weise aktiv oder passiv wieder abgeschaltet: die Anfahrboost-Funktion wird passiv abgeschaltet, wenn sich über einen längeren Zeitraum kein Pedelec-Stillstand mehr ereignet hat, beispielsweise über mehr als 5 Minuten. Es wird dann nämlich angenommen, dass kein stadt-typisches Geschwindigkeitsprofil mehr vorliegt, so dass auf die Anfahrboost-Funktion verzichtet werden kann. Die Anfahrboost-Funktion wird aktiv abgeschaltet, indem bei einem Pedelec-Stillstand der Erhöhungs-Taster 25 gedrückt wird.

Grundsätzlich wird bei eingeschalteter Anfahrboost-Funktion in dem Display 22 die eingeschaltete Anfahrboost-Funktion mit einem blinkenden Boostfunktions-Indikator 24 optisch signalisiert.

## Patentansprüche

1. Pedelec (10) mit einem Tretantrieb (16), einem elektrischen Unterstützungsmotor (14) und einer Pedelec-Steuervorrichtung (20) zur Steuerung des den Tretantrieb (16) unterstützenden Tretlager-Unterstützungsmotors (14),
wobei die Steuervorrichtung (20) mit einem Geschwindigkeits-Sensor (40) und einem Tretdrehmoment-Sensor (44) verbunden ist, und einen Taster (25,26) zur schrittweisen Veränderung des Tretdrehmoment-abhängigen General-Unterstützungsgrades aufweist, und
wobei die Steuervorrichtung (20) derart ausgebildet ist, dass nur bei Pedelec-Stillstand und bei gleichzeitiger Betätigung des Unterstützungsgrad-Tasters (25,26) eine Anfahrboost-Funktion eingeschaltet wird, sodass beim an den Stillstand anschließenden Anfahren der Unterstützungsgrad über den General-Unterstützungsgrad hinaus um eine Boostanhebung angehoben ist, und
wobei die Steuervorrichtung (20) derart ausgebildet ist, dass die Anfahrboost-Funktion nach einmaligem Anfahren abgeschaltet wird.

2. Pedelec (10) nach Anspruch 1, wobei die Steuervorrichtung (20) derart ausgebildet ist, dass die Anfahrboost-Funktion durch erneute Betätigung des Tasters (25,26) bei Pedelec-Stillstand abgeschaltet wird.

3. Pedelec (10) nach einem der vorangegangenen Ansprüche, wobei die Steuervorrichtung (20) derart ausgebildet ist, dass die Boostanhebung nach Erreichen eines Abbruchkriteriums beendet ist.

4. Pedelec (10) nach Anspruch 3, wobei das Abbruchkriterium ein Zeitwert oder die Geschwindigkeit ist.

5. Pedelec (10) nach einem der vorangegangenen Ansprüche, wobei ein Neigungssensor (42) vorgesehen ist, der mit der Steuervorrichtung (20) verbunden ist, wobei die Steuervorrichtung (20) derart ausgebildet ist, dass der Grad der Boostanhebung abhängig von dem Pedelec-Nickwinkel N ist.

6. Pedelec (10) nach einem der vorangegangenen Ansprüche 1-5, wobei die Steuervorrichtung (20) derart ausgebildet ist, dass die Boostanhebung unabhängig von dem Tretdrehmoment ist.

## Claims

1. Pedelec (10) with a pedal drive (16), an electric assistance motor (14) and a pedelec control device (20) for controlling the pedal bearing assistance motor (14) supporting the pedal drive (16),
wherein the control device (20) is connected to a speed sensor (40) and a pedal torque sensor (44), and is provided with a pushbutton (25, 26) for the stepwise change of the pedal torque-dependent general assistance degree, and
wherein the control device (20) is designed in such a way that when the pedelec is at a standstill and when the assistance degree pushbutton (25, 26) is actuated at the same time, a start-up boost function is switched on, so that during the start-up following the standstill, the assistance degree is raised beyond the general assistance degree by a boost increase, and wherein the control device (20) is designed in such a way that the start-up boost function is switched off after a single start-up.

2. Pedelec (10) according to claim 1, wherein the control device (20) is designed in such a way that the start-up boost function is switched off by a repeated actuation of the pushbutton (25, 26) when the pedelec is at a standstill.

3. Pedelec (10) according to one of the preceding claims, wherein the control device (20) is designed in such a way that the boost increase is ended after an abort criterion has been reached.

4. Pedelec (10) according to claim 3, wherein the abort criterion is a time value or the speed.

5. Pedelec (10) according to one of the preceding claims, wherein an inclination sensor (42) is provided which is connected to the control device (20),
wherein the control device (20) is designed in such a way that the degree of boost increase is dependent on the pedelec pitch angle N.

6. Pedelec (10) according to one of the preceding claims 1-5, wherein the control device (20) is designed in such a way that the boost increase is independent of the pedaling torque.

## Revendications

1. Cycle à pédalage assisté (10) comprenant un entraînement de pédalier (16), un moteur d'assistance électrique (14) et un dispositif de commande de pédalier (20) pour commander le moteur d'assistance de pédalier (14) assistant l'entraînement de pédalier (16),
dans lequel le dispositif de commande (20) est relié à un capteur de vitesse (40) et à un capteur de couple de pédalier (44), et présente un bouton-poussoir (25, 26) pour la modification pas à pas du degré d'assistance général dépendant du couple de pédalier, et
dans lequel le dispositif de commande (20) est réalisé de telle sorte que seulement en cas d'arrêt de pédalier et en cas d'actionnement simultané du bouton-poussoir de degré d'assistance (25, 26), une fonction d'amplification de démarrage est activée, de sorte que lors du démarrage suivant l'arrêt,
le degré d'assistance est augmenté au-delà du degré d'assistance général d'une augmentation d'amplification, et
dans lequel le dispositif de commande (20) est réalisé de telle sorte que la fonction d'amplification de démarrage est désactivée après un démarrage unique.

2. Cycle à pédalage assisté (10) selon la revendication 1, dans lequel le dispositif de commande (20) est réalisé de telle sorte que la fonction d'amplification de démarrage est désactivée par un nouvel actionnement du bouton-poussoir (25, 26) en cas d'arrêt de pédalier.
est désactivée.

3. Cycle à pédalage assisté (10) selon l'une quelconque des revendications précédentes, dans lequel le dispositif de commande (20) est réalisé de telle sorte que l'augmentation d'amplification est terminée après l'atteinte d'un critère d'interruption.

4. Cycle à pédalage assisté (10) selon la revendication 3, dans lequel le critère d'interruption est une valeur de temps ou la vitesse.

5. Cycle à pédalage assisté (10) selon l'une quelconque des revendications précédentes, dans lequel un capteur d'inclinaison (42) est prévu, lequel est relié au dispositif de commande (20),
dans lequel le dispositif de commande (20) est réalisé de telle sorte que le degré de l'augmentation d'amplification dépend de l'angle de tangage de pédalier N.

6. Cycle à pédalage assisté (10) selon l'une quelconque des revendications précédentes 1 à 5, dans lequel le dispositif de commande (20) est réalisé de telle sorte que l'augmentation d'amplification est indépendante du couple de pédalage.
